# EUROPEAN PATENT APPLICATION

(11) **EP 4 613 408 A1**
(43) Date of publication of application: **10.09.2025**
(21) Application number: 22964419.0
(22) Date of filing: 02.11.2022
(51) Int. Cl.: B23C 5/28, B23C 5/10

(54) **CUTTING TOOL**

(71) Applicant: SUMITOMO ELECTRIC INDUSTRIES, LTD., Osaka-shi, Osaka 541-0041 (JP)
(72) Inventor: YOSHIDA, Tomoya, Osaka-shi, Osaka 541-0041 (JP)
(74) Representative: Boult Wade Tennant LLP
(86) International application number: PCT/JP2022/041008
(87) International publication number: WO 2024/095399

(57) **Abstract**

A cutting tool comprises a body. The body has a front end surface, a rear end surface, and an outermost circumferential surface. The rear end surface is opposite to the front end surface. The outermost circumferential surface is contiguous to each of the front end surface and the rear end surface. The body includes a first member, a second member, and a fixing member. The first member surrounds an axis. The first member has a first outer circumferential surface. The second member has an inner circumferential surface. The inner circumferential surface surrounds the first outer circumferential surface. The second member forms each of the front end surface, the rear end surface, and the outermost circumferential surface. The fixing member closes a gap between the first outer circumferential surface and the inner circumferential surface. The first member has a through hole formed therethrough. The through hole extends along the axis. A space is formed between the first member and the second member. The space surrounds the through hole. The second member has a channel formed therethrough. The channel is contiguous to the space. The channel opens at the outermost circumferential surface.

## Description

### TECHNICAL FIELD

The present disclosure relates to a cutting tool.

### BACKGROUND ART

Japanese Patent Laying-Open No. 2010-234457 (PTL 1) discloses a cutting tool comprising a tool body and a plurality of cutting inserts attached thereto. The tool body has a jet hole formed to jet coolant therethrough toward the cutting insert.

### CITATION LIST

### PATENT LITERATURE

PTL 1: Japanese Patent Laying-Open No. 2010-234457

### SUMMARY OF INVENTION

According to the present disclosure, a cutting tool is configured to be rotatable about an axis. The cutting tool comprises a body and a cutting insert. The body includes a front end surface, a rear end surface, and an outermost circumferential surface. The rear end surface is opposite to the front end surface. The outermost circumferential surface is contiguous to each of the front end surface and the rear end surface. The outermost circumferential surface has a pocket. The cutting insert is disposed in the pocket. The body includes a first member, a second member, a support member, and a fixing member. The first member surrounds the axis. The first member has a first outer circumferential surface. The second member has an inner circumferential surface. The inner circumferential surface surrounds the first outer circumferential surface. The second member forms each of the front end surface, the rear end surface, and the outermost circumferential surface. The support member interconnects the first outer circumferential surface and the inner circumferential surface. The support member is spaced from each of the front end surface and the rear end surface. The fixing member closes a gap between the first outer circumferential surface and the inner circumferential surface. The first member has a through hole formed therethrough. The through hole extends along the axis. A space is formed between the first member and the second member. The space surrounds the through hole. The second member has a channel formed therethrough. The channel is contiguous to the space. The channel opens at the outermost circumferential surface.

### BRIEF DESCRIPTION OF DRAWINGS

Fig. 1 is a schematic perspective view showing a configuration of a cutting tool according to a first embodiment.
Fig. 2 is a schematic front view showing the configuration of the cutting tool according to the first embodiment.
Fig. 3 is a schematic vertical cross section taken along a line III-III of Fig. 2.
Fig. 4 is a schematic lateral cross section taken along a line IV-IV of Fig. 3.
Fig. 5 is a schematic lateral cross section taken along a line V-V of Fig. 3.
Fig. 6 is an enlarged schematic perspective view showing a configuration of a cutting insert and a pocket.
Fig. 7 is an enlarged schematic perspective view showing a configuration of the pocket.
Fig. 8 is a schematic vertical cross section showing a shape in cross section of a first channel portion.
Fig. 9 is an enlarged schematic cross section showing a region IX shown in Fig. 5.
Fig. 10 is a partial schematic cross section showing a configuration of a cutting tool according to a second embodiment.
Fig. 11 is a schematic bottom view showing a configuration of a holder.
Fig. 12 is a schematic lateral cross section taken along a line XII-XII of Fig. 10.
Fig. 13 is an enlarged schematic perspective view showing how a cutting fluid flows around a cutting insert.

### DETAILED DESCRIPTION

[Problem to be Solved by the Present Disclosure]

An object of the present disclosure is to provide a cutting tool capable of increasing a flow rate of a cutting fluid discharged from an outermost circumferential surface of a body.

### [Advantageous Effect of the Present Disclosure]

The present disclosure can provide a cutting tool capable of increasing a flow rate of a cutting fluid discharged from an outermost circumferential surface of a body.

### [Description of Embodiments]

Initially, embodiments of the present disclosure will be enumerated and described.
(1) According to the present disclosure, a cutting tool 500 is configured to be rotatable about an axis A. Cutting tool 500 comprises a body 100 and a cutting insert 200. Body 100 includes a front end surface 1, a rear end surface 2, and an outermost circumferential surface 21. Rear end surface 2 is opposite to front end surface 1. Outermost circumferential surface 21 is contiguous to each of front end surface 1 and rear end surface 2. Outermost circumferential surface 21 has a pocket 70. Cutting insert 200 is disposed in pocket 70. Body 100 includes a first member 10, a second member 20, a support member 30, and a fixing member 40. First member 10 surrounds axis A. First member 10 has a first outer circumferential surface 11. Second member 20 has an inner circumferential surface 22. Inner circumferential surface 22 surrounds first outer circumferential surface 11. Second member 20 forms each of front end surface 1, rear end surface 2, and outermost circumferential surface 21. A support member 30 interconnects first outer circumferential surface 11 and inner circumferential surface 22. Support member 30 is spaced from each of front end surface 1 and rear end surface 2. Fixing member 40 closes a gap between first outer circumferential surface 11 and inner circumferential surface 22. First member 10 has a through hole 91 formed therethrough. Through hole 91 extends along axis A. A space 92 is formed between first member 10 and second member 20. Space 92 surrounds through hole 91. Second member 20 has a channel 50 formed through. Channel 50 is contiguous to space 92. Channel 50 opens at outermost circumferential surface 21.
   This allows a cutting fluid supplied into body 100 to flow into space 92. This can reduce a flow rate of the cutting fluid flowing into through hole 91. This can in turn suppress flowing of the cutting fluid out of body 100 through through hole 91. When this is compared with no space 92 formed, the former can increase a flow rate of the cutting fluid discharged from outermost circumferential surface 21.
(2) According to cutting tool 500 according to (1) above, channel 50 may have a channel portion 53 that is curved as observed along axis A. This can reduce a pressure loss of the cutting fluid flowing through channel portion 53 while allowing an increased degree of freedom in designing channel portion 53.
(3) According to cutting tool 500 according to (1) or (2) above, channel 50 has an elliptical shape in a cross section perpendicular to a direction in which channel 50 extends.
(4) According to cutting tool 500 according to any one of (1) to (3) above, when in the cross section perpendicular to the direction in which channel 50 extends channel 50 has a width W1 in a first direction 101 from front end surface 1 toward rear end surface 2 and a width W2 in a second direction 102 perpendicular to first direction 101, width W1 may be larger than width W2.
(5) According to cutting tool 500 of any one of (1) to (4) above, cutting insert 200 may include a bottom surface 83 and a rake face 81. Bottom surface 83 may be in contact with outermost circumferential surface 21. Rake face 81 may be opposite to bottom surface 83. Outermost circumferential surface 21 may have a seat surface 41 and a first surface 61. Seat surface 41 may be in contact with bottom surface 83. First surface 61 may be located forward of seat surface 41 in direction of rotation R. Seat surface 41 and first surface 61 may form pocket 70. Channel 50 may include a first channel portion 51. First channel portion 51 may open at first surface 61. First channel portion 51 may open toward rake face 81. This can effectively cool cutting edge 84 contiguous to rake face 81.
(6) According to cutting tool 500 of (5) above, channel 50 may include a second channel portion 52. Second channel portion 52 may open at first surface 61. Second channel portion 52 may be spaced from first channel portion 51. Second channel portion 52 may open toward rake face 81. First surface 61 may have a first opening 151 and a second opening 152. First opening 151 may be contiguous to first channel portion 51. Second opening 152 may be contiguous to second channel portion 52. First opening 151 may be different in area from second opening 152.
(7) According to cutting tool 500 of (5) above, channel 50 may include second channel portion 52. Second channel portion 52 may open at first surface 61. Second channel portion 52 may be spaced from first channel portion 51. Second channel portion 52 may open toward rake face 81. When an area of first channel portion 51 in a cross section perpendicular to a direction in which first channel portion 51 extends is defined as a first area and an area of second channel portion 52 in a cross section perpendicular to a direction in which second channel portion 52 extends is defined as a second area, the first area may be different from the second area.
(8) According to cutting tool 500 according to any one of (5) to (7) above, cutting insert 200 may include a flank face 82. Flank face 82 may be contiguous to rake face 81. Outermost circumferential surface 21 may have a second surface 62. Second surface 62 may be located rearward of seat surface 41 in direction of rotation R. Second surface 62 may be located in a direction from axis A toward outermost circumferential surface 21 with respect to seat surface 41. Channel 50 may include a third channel portion 53. Third channel portion 53 may open at second surface 62. Third channel portion 53 may open toward flank face 82. This can effectively cool cutting edge 84 contiguous to flank face 82.
(9) According to cutting tool 500 of any one of (1) to (8) above, first member 10 may include a first inner circumferential surface 12. First inner circumferential surface 12 may form through hole 91. First inner circumferential surface 12 may include a first inner circumferential surface portion 13 and a second inner circumferential surface portion 14. First inner circumferential surface portion 13 extends along axis A. Second inner circumferential surface portion 14 is located between first inner circumferential surface portion 13 and front end surface 1. Second inner circumferential surface portion 14 is inclined with respect to first inner circumferential surface portion 13. Second inner circumferential surface portion 14 may have a diameter decreasing as it is farther away from front end surface 1.
   When a three-dimensional printer is used to form body 100, forming a portion protruding in a direction perpendicular to a direction in which the three-dimensional printer deposits layers requires a support material. In that case, it is necessary to remove the support material from body 100. This increases a period of time required for forming body 100. According to cutting tool 500 according to (9) above, when the three-dimensional printer deposits layers in first direction 101, second inner circumferential surface portion 14 can be formed while the support material is used in a reduced amount. This can reduce the period of time required for forming body 100.
(10) Cutting tool 500 according to any one of (1) to (9) above may further comprise a holder 300. Holder 300 may be configured to supply space 92 with a cutting fluid. Holder 300 may have at least one outlet 98. First member 10, second member 20, and support member 30 may form at least one inlet 99. At least one inlet 99 may be contiguous to space 92. As observed along axis A, at least one outlet 98 may overlap at least one inlet 99. At least one outlet 98 may be equal in number to at least one inlet 99.

When this is compared with outlet 98 failing to overlap inlet 99 as observed along axis A, the former provides a shorter distance between outlet 98 and inlet 99. This can reduce a pressure loss of a cutting fluid discharged from outlet 98 and flowing toward inlet 99.

### [Details of Embodiments of the Disclosure]

Hereinafter, embodiments of the present disclosure will be described in detail with reference to the drawings. In the following figures, identical or equivalent components will be identically denoted and will not be described repeatedly.

### (First Embodiment)

Initially, a configuration of a cutting tool 500 according to a first embodiment will be described.

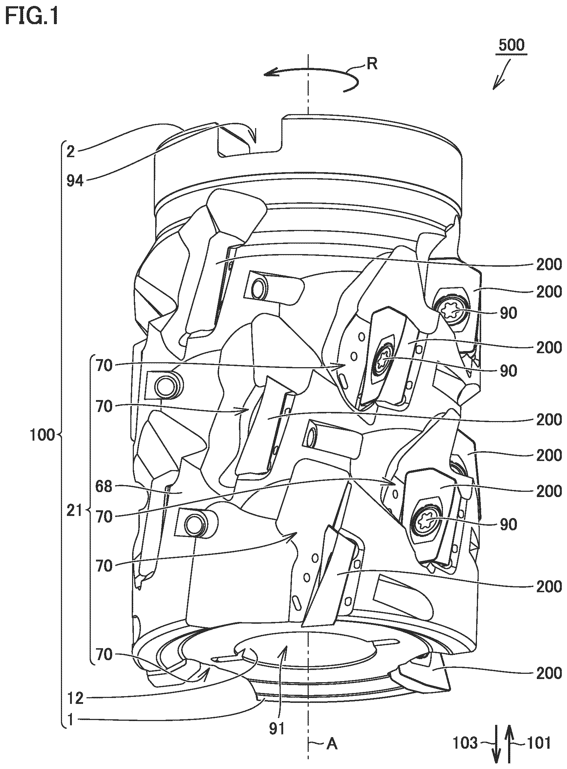

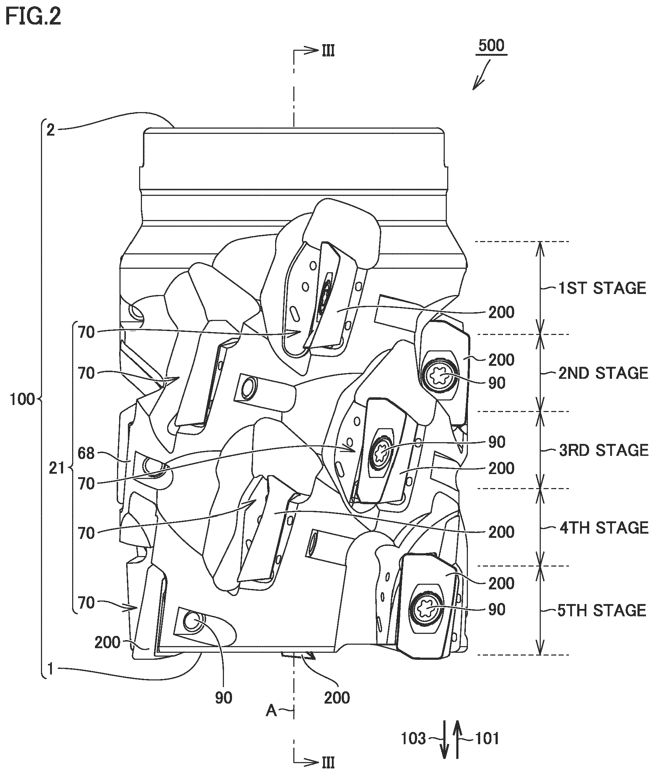

Fig. 1 is a schematic perspective view showing a configuration of cutting tool 500 according to the first embodiment. Fig. 2 is a schematic front view showing the configuration of cutting tool 500 according to the first embodiment. As shown in Figs. 1 and 2, cutting tool 500 comprises a body 100, a plurality of cutting inserts 200, and a plurality of first fastening screws 90 as major components. Cutting tool 500 is configured to be rotatable about an axis A. In other words, cutting tool 500 is a rotary cutting tool. Cutting tool 500 is, for example, an end mill. Cutting tool 500 is, for example, a repeater cutter.

Body 100 has a first front end surface 1, a first rear end surface 2, a second outer circumferential surface 21, and a first inner circumferential surface 12. First rear end surface 2 is opposite to first front end surface 1. First rear end surface 2 is disposed so as to face a tool spindle (not shown) that rotates cutting tool 500. A direction from first front end surface 1 toward first rear end surface 2 is defined as a first direction 101. A direction from first rear end surface 2 toward first front end surface 1 is defined as a third direction 103.

Second outer circumferential surface 21 is contiguous to each of first front end surface 1 and first rear end surface 2. Second outer circumferential surface 21 is an outermost circumferential surface of body 100. Second outer circumferential surface 21 surrounds axis A. Second outer circumferential surface 21 has an outermost circumferential surface portion 68. Second outer circumferential surface 21 has a plurality of pockets 70. The plurality of pockets 70 are each recessed inward with respect to outermost circumferential surface portion 68. Being inward means being in a direction from second outer circumferential surface 21 toward axis A.

First inner circumferential surface 12 is contiguous to first front end surface 1. First inner circumferential surface 12 surrounds axis A. First inner circumferential surface 12 is surrounded by second outer circumferential surface 21. Body 100 has a first through hole 91 formed therethrough. First inner circumferential surface 12 defines first through hole 91. First rear end surface 2 has a groove 94. Groove 94 extends for example in a direction perpendicular to axis A.

As shown in Figs. 1 and 2, cutting insert 200 is disposed in pocket 70. Specifically, one cutting insert 200 is disposed in one pocket 70. On second outer circumferential surface 21, cutting insert 200 is disposed along a curve that extends helically around axis A. Cutting insert 200 is attached to body 100 with a first fastening screw 90.

Body 100 has 15 cutting inserts 200 attached thereto, for example. Three cutting inserts 200 are disposed in a row in a direction of rotation R. In other words, three cutting inserts 200 constitute one stage. Cutting inserts 200 are disposed in five stages. From a different point of view, cutting inserts 200 are divided into three groups. One group includes five cutting inserts 200. The five cutting inserts 200 included in one group are disposed along a helical curve. In other words, cutting inserts 200 are disposed along three helical curves. The three helical curves are spaced from one another.

Similarly, second outer circumferential surface 21 has 15 pockets 70, for example. Three pockets 70 are disposed in one row in direction of rotation R. In other words, three pockets 70 constitute one stage. Pockets 70 are disposed in five stages. From a different point of view, pockets 70 are divided into three groups. One group includes five pockets 70. The five pockets 70 included in one group are disposed along a helical curve. In other words, pockets 70 are disposed along three helical curves. The five pockets 70 included in one group may be contiguous to one another.

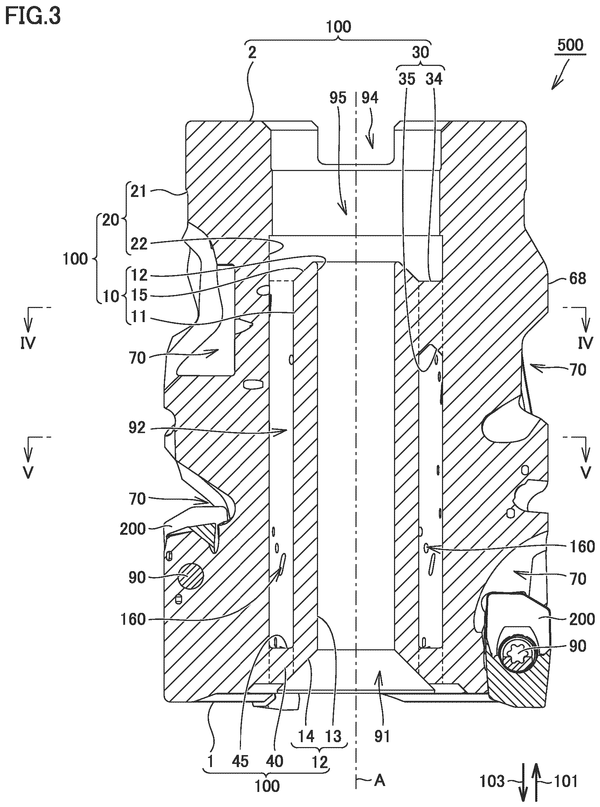

Fig. 3 is a schematic vertical cross section taken along a line III-III of Fig. 2. The cross section shown in Fig. 3 is a cross section including axis A and intersecting a support member 30. As shown in Fig. 3, body 100 includes a first member 10, a second member 20, a support member 30, and a fixing member 40.

First member 10 extends along axis A. First member 10 has a first outer circumferential surface 11, an inclined surface 15, and a first inner circumferential surface 12. First outer circumferential surface 11 extends along axis A. Inclined surface 15 is contiguous to each of first outer circumferential surface 11 and first inner circumferential surface 12.

First inner circumferential surface 12 has a first inner circumferential surface portion 13 and a second inner circumferential surface portion 14. First inner circumferential surface portion 13 is contiguous to inclined surface 15. First inner circumferential surface portion 13 extends along axis A. Second inner circumferential surface portion 14 is contiguous to first inner circumferential surface portion 13. In first direction 101, second inner circumferential surface portion 14 is located between first inner circumferential surface portion 13 and first front end surface 1. Second inner circumferential surface portion 14 may be contiguous to first front end surface 1. Second inner circumferential surface portion 14 is inclined outward with respect to first inner circumferential surface portion 13. From a different point of view, second inner circumferential surface portion 14 has a diameter decreasing as it is farther away from first front end surface 1. Being outward means being in a direction from axis A toward second outer circumferential surface 21.

Second member 20 forms each of first front end surface 1, first rear end surface 2, and second outer circumferential surface 21. Second member 20 has a second inner circumferential surface 22. Second inner circumferential surface 22 is spaced from each of first outer circumferential surface 11 and first front end surface 1. Second inner circumferential surface 22 faces first outer circumferential surface 11. Second inner circumferential surface 22 is contiguous to first rear end surface 2. Second inner circumferential surface 22 extends along axis A. Second inner circumferential surface 22 may be substantially parallel to first outer circumferential surface 11.

Support member 30 is located between first outer circumferential surface 11 and second inner circumferential surface 22. Support member 30 interconnects first member 10 and second member 20. Specifically, support member 30 interconnects first outer circumferential surface 11 and second inner circumferential surface 22. Support member 30 is spaced from each of first front end surface 1 and first rear end surface 2. In first direction 101, support member 30 is located between first front end surface 1 and first rear end surface 2.

Support member 30 has a fourth surface 34 and a fifth surface 35. Fourth surface 34 is contiguous to each of inclined surface 15 and second inner circumferential surface 22. In first direction 101, fourth surface 34 may be located between inclined surface 15 and first front end surface 1. Fourth surface 34 is, for example, planar. Fifth surface 35 is opposite to fourth surface 34. Specifically, fifth surface 35 is located in third direction 103 with respect to fourth surface 34. Fifth surface 35 is contiguous to each of first outer circumferential surface 11 and second inner circumferential surface 22. Fifth surface 35 is recessed in first direction 101. In first direction 101, fifth surface 35 is located between fourth surface 34 and first front end surface 1.

Fixing member 40 interconnects first member 10 and second member 20 and closes a gap between first outer circumferential surface 11 and second inner circumferential surface 22. Fixing member 40 is spaced from support member 30. Fixing member 40 is located in third direction 103 with respect to support member 30. Fixing member 40 may form a portion of first front end surface 1. Fixing member 40 surrounds axis A. Fixing member 40 has a third surface 45. Third surface 45 is contiguous to each of first outer circumferential surface 11 and second inner circumferential surface 22. Third surface 45 faces fifth surface 35 of support member 30.

First member 10 has a first through hole 91 formed therethrough. First through hole 91 may penetrate first front end surface 1 and inclined surface 15. First through hole 91 extends along axis A.

Body 100 has an insertion receiving hole 95. Insertion receiving hole 95 extends along axis A. Insertion receiving hole 95 is formed by second inner circumferential surface 22. Insertion receiving hole 95 opens at first rear end surface 2. Insertion receiving hole 95 is contiguous to first through hole 91. Insertion receiving hole 95 is formed in first direction 101 with respect to first through hole 91.

A space 92 is formed between first member 10 and second member 20. Specifically, space 92 is defined by first outer circumferential surface 11, second inner circumferential surface 22, and third surface 45. Space 92 is contiguous to insertion receiving hole 95. Space 92 is spaced from first through hole 91. From a different point of view, space 92 is isolated from first through hole 91 by first member 10. Space 92 is isolated from the outside of body 100 by second member 20 and fixing member 40. Space 92 extends along axis A.

Second inner circumferential surface 22 has a plurality of connection ports 160. Connection port 160 connects space 92 and a channel 50 together. From a different point of view, channel 50 opens at second inner circumferential surface 22. Channel 50 will more specifically be described hereinafter. The plurality of connection ports 160 are spaced from insertion receiving hole 95. In first direction 101, connection port 160 is located between third surface 45 and inclined surface 15.

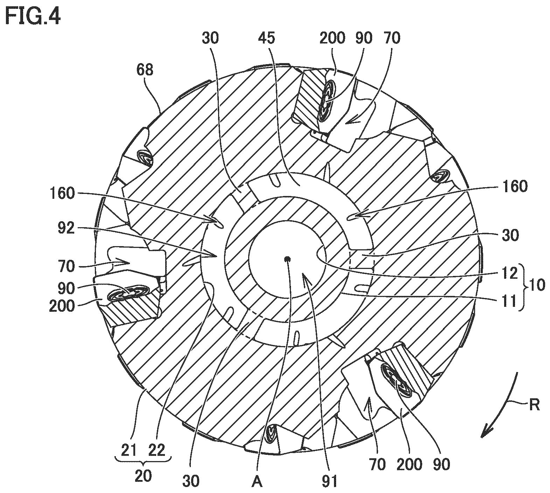

Fig. 4 is a schematic lateral cross section taken along a line IV-IV of Fig. 3. The cross section shown in Fig. 4 is a cross section perpendicular to axis A and intersecting support member 30.

As shown in Fig. 4, first member 10 surrounds axis A. In other words, first inner circumferential surface 12 surrounds axis A. As observed along axis A, first member 10 has an annular shape. Second member 20 surrounds first member 10. In other words, second inner circumferential surface 22 surrounds first member 10. As observed along axis A, second member 20 has an annular shape. Third surface 45 surrounds axis A. As observed along axis A, third surface 45 has an annular shape. Third surface 45 may have a plurality of connection ports 160.

Body 100 has a plurality of support members 30. There are three support members 30, for example. The three support members 30 are spaced from one another. As observed along axis A, the three support members 30 are positioned so as to be three-fold symmetrical with respect to axis A, for example.

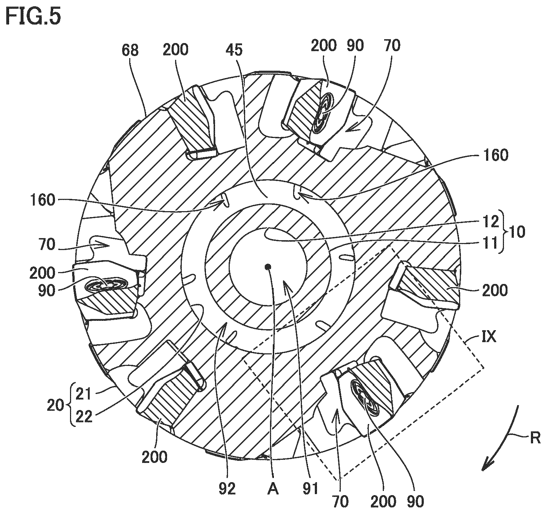

Fig. 5 is a schematic lateral cross section taken along a line V-V of Fig. 3. The cross section shown in Fig. 5 is a cross section perpendicular to axis A and passing between support member 30 and fixing member 40 in first direction 101. As shown in Figs. 3 and 5, space 92 surrounds first through hole 91. From a different point of view, space 92 surrounds axis A. As observed along axis A, space 92 is annular.

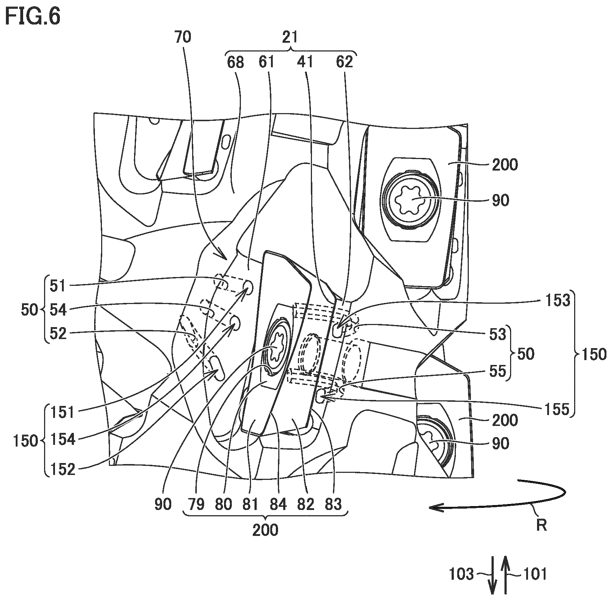

Fig. 6 is an enlarged perspective schematic view showing a configuration of cutting insert 200 and pocket 70. As shown in Fig. 6, cutting insert 200 has a bottom surface 83, a rake face 81, a flank face 82, and a flat surface 80. Bottom surface 83 is in contact with second outer circumferential surface 21 of body 100. Bottom surface 83 is, for example, planar. Rake face 81 is opposite to bottom surface 83. Flank face 82 is contiguous to each of rake face 81 and bottom surface 83. A ridge line formed by rake face 81 and flank face 82 forms a cutting edge 84. Cutting edge 84 may be formed to be inclined rearward in direction of rotation R as the cutting edge is farther away from first front end surface 1 (see Figs. 1 and 2) in first direction 101. Flat surface 80 is opposite to bottom surface 83. Flat surface 80 is contiguous to rake face 81. Flat surface 80 has a second through hole 79 formed therethrough.

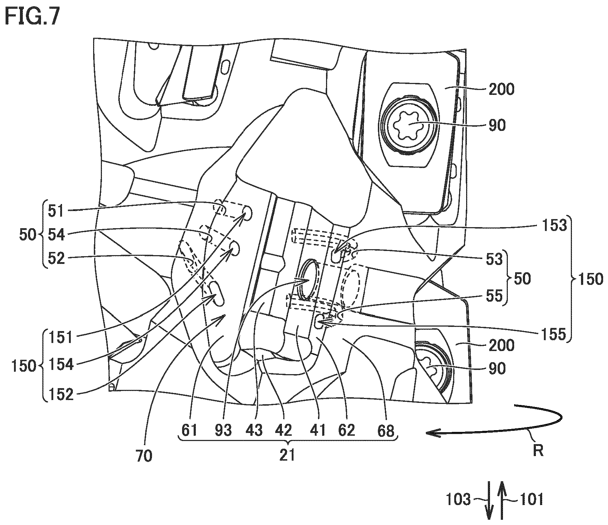

Fig. 7 is an enlarged schematic perspective view showing a configuration of pocket 70. The enlarged schematic perspective view shown in Fig. 7 corresponds to the enlarged schematic perspective view shown in Fig. 6. Fig. 7 does not show some of the plurality of cutting inserts 200.

As shown in Figs. 6 and 7, second outer circumferential surface 21 has a first seat surface 41, a second seat surface 42, a third seat surface 43, a first surface 61, and a second surface 62. First seat surface 41, second seat surface 42, third seat surface 43, first surface 61, and second surface 62 form pocket 70. First seat surface 41, second seat surface 42, and third seat surface 43 are each a surface on which cutting insert 200 is seated.

As shown in Figs. 6 and 7, first seat surface 41 comes into contact with bottom surface 83 of cutting insert 200. First seat surface 41 is, for example, planar. Second seat surface 42 is located in third direction 103 with respect to first seat surface 41. Second seat surface 42 is, for example, planar. Third seat surface 43 is located in first direction 101 with respect to second seat surface 42. Third seat surface 43 is, for example, planar. In a radial direction, third seat surface 43 is located inward of each of first seat surface 41 and second seat surface 42. The radial direction is a direction perpendicular to axis A and directed from axis A toward second outer circumferential surface 21.

First surface 61 is located forward of first seat surface 41 in direction of rotation R. First surface 61 is, for example, planar. Second surface 62 is contiguous to each of first seat surface 41 and outermost circumferential surface portion 68. Second surface 62 is located rearward of first seat surface 41 in direction of rotation R. Second surface 62 is spaced from first surface 61. In the radial direction, second surface 62 is located between first seat surface 41 and outermost circumferential surface portion 68.

As shown in Figs. 6 and 7, body 100 has channel 50 formed therethrough. Figs. 6 and 7 show channel 50 by dashed lines. Channel 50 opens at second outer circumferential surface 21. Specifically, channel 50 opens at each of first surface 61 and second surface 62. From a different point of view, first surface 61 and second surface 62 each have an opening 150 of channel 50. Channel 50 is contiguous to space 92 (see Fig. 3). Channel 50 interconnects space 92 and an outside of body 100.

Channel 50 includes a first channel portion 51, a second channel portion 52, a third channel portion 53, a fourth channel portion 54, and a fifth channel portion 55. First channel portion 51, second channel portion 52, third channel portion 53, fourth channel portion 54, and fifth channel portion 55 are spaced from one another.

One pocket 70 is contiguous to a plurality of channel portions. One pocket 70 is contiguous to five channel portions, for example. First surface 61 has a plurality of openings 150. First surface 61 has three openings 150, for example. Second surface 62 has a plurality of openings 150. Second surface 62 has two openings 150, for example. Opening 150 has a first opening 151, a second opening 152, a third opening 153, a fourth opening 154, and a fifth opening 155.

First channel portion 51 opens at first surface 61. From a different point of view, first surface 61 has first opening 151. First opening 151 is contiguous to first channel portion 51. First channel portion 51 opens toward rake face 81. In the present specification, a channel opening toward rake face 81 means that the channel opens so that a liquid linearly discharged from the channel impinges on rake face 81.

Second channel portion 52 opens at first surface 61. From a different point of view, first surface 61 has second opening 152. Second opening 152 is contiguous to second channel portion 52. Second channel portion 52 opens toward rake face 81. Second channel portion 52 may be located in third direction 103 with respect to first channel portion 51.

Third channel portion 53 opens at second surface 62. From a different point of view, second surface 62 has third opening 153. Third opening 153 is contiguous to third channel portion 53. Third channel portion 53 opens toward flank face 82. In the present specification, a channel opening toward flank face 82 means that the channel opens so that a liquid linearly discharged from the channel impinges on flank face 82.

Fourth channel portion 54 opens at first surface 61. From a different point of view, first surface 61 has fourth opening 154. Fourth opening 154 is contiguous to fourth channel portion 54. Fourth channel portion 54 opens toward rake face 81. In first direction 101, fourth channel portion 54 may be located between first channel portion 51 and second channel portion 52.

Fifth channel portion 55 opens at second surface 62. From a different point of view, second surface 62 has fifth opening 155. Fifth opening 155 is contiguous to fifth channel portion 55. Fifth channel portion 55 opens toward flank face 82. Fifth channel portion 55 may be located in third direction 103 with respect to third channel portion 53.

First opening 151 is different in area from second opening 152. Second opening 152 may be larger in area than first opening 151 as observed in a direction perpendicular to first surface 61. This allows second channel portion 52 to discharge liquid at a larger flow rate than first channel portion 51. This allows a portion of cutting edge 84 close to first front end surface 1 to be effectively cooled. Fourth opening 154 may be substantially equal in area to first opening 151 as observed in the direction perpendicular to first surface 61.

An area of first channel portion 51 in a cross section perpendicular to a direction in which first channel portion 51 extends is defined as a first area. An area of second channel portion 52 in a cross section perpendicular to a direction in which second channel portion 52 extends is defined as a second area. An area of third channel portion 53 in a cross section perpendicular to a direction in which third channel portion 53 extends is defined as a third area. An area of fourth channel portion 54 in a cross section perpendicular to a direction in which fourth channel portion 54 extends is defined as a fourth area. An area of fifth channel portion 55 in a cross section perpendicular to a direction in which fifth channel portion 55 extends is defined as a fifth area.

The first area may be different from the second area. The second area may be larger than the first area. The fourth area may be substantially equal to the first area. The third area may be substantially equal to the fifth area. The third area may be smaller than the second area.

As shown in Figs. 6 and 7, first surface 61 may have the plurality of openings 150 aligned in a direction in which cutting edge 84 extends. Specifically, first opening 151, second opening 152, and fourth opening 154 may be aligned in the direction in which cutting edge 84 extends. Similarly, second surface 62 may have the plurality of openings 150 aligned in the direction in which cutting edge 84 extends. Specifically, third opening 153 and fifth opening 155 may be aligned in the direction in which cutting edge 84 extends.

As shown in Figs. 6 and 7, first seat surface 41 has a first screw hole 93. In first direction 101, first screw hole 93 is formed between third channel portion 53 and fifth channel portion 55. In first screw hole 93, first fastening screw 90 is fastened to body 100. First fastening screw 90 is located in second through hole 79 of cutting insert 200.

In the above description has been described a configuration in which channel 50 has five channel portions. However, cutting tool 500 according to the present disclosure is not limited in configuration to the configuration described above. Specifically, channel 50 may have less than five channel portions or may have five or more channel portions. First surface 61 and second surface 62 may have five or more openings 150. First surface 61 may have three or more openings 150. Second surface 62 may have two or more openings 150.

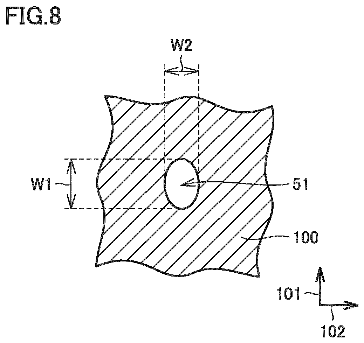

Fig. 8 is a schematic vertical cross section of a shape in cross section of first channel portion 51. The cross section shown in Fig. 8 is a cross section perpendicular to the direction in which first channel portion 51 extends. As shown in Fig. 8, in the cross section perpendicular to the direction in which channel 50 extends, a direction perpendicular to first direction 101 is defined as a second direction 102.

In the cross section perpendicular to the direction in which first channel portion 51 extends, first channel portion 51 for example has an elliptical shape. The elliptical shape is not limited to a geometric ellipse. The elliptical shape may include an elliptical arc and be an elongated shape.

In the cross section perpendicular to the direction in which channel 50 extends, a width of channel 50 in first direction 101 is defined as a first width W1. In the cross section perpendicular to the direction in which channel 50 extends, a width of channel 50 in second direction 102 is defined as a second width W2. As shown in Fig. 8, first width W1 may be larger than second width W2. First width W1 divided by second width W2 is, for example, 1.5 or more and 2.5 or less. In the cross section perpendicular to the direction in which channel 50 extends, channel 50 may have an elliptical shape elongated in first direction 101.

While a configuration with first width W1 larger than second width W2 has been described above, cutting tool 500 according to the present disclosure is not limited in configuration to the configuration described above. Specifically, first width W1 may be smaller than second width W2. In the cross section perpendicular to the direction in which channel 50 extends, channel 50 may have an elliptical shape elongated in second direction 102. First width W1 may be substantially equal to second width W2. Channel 50 may have a round shape in the cross section perpendicular to the direction in which channel 50 extends.

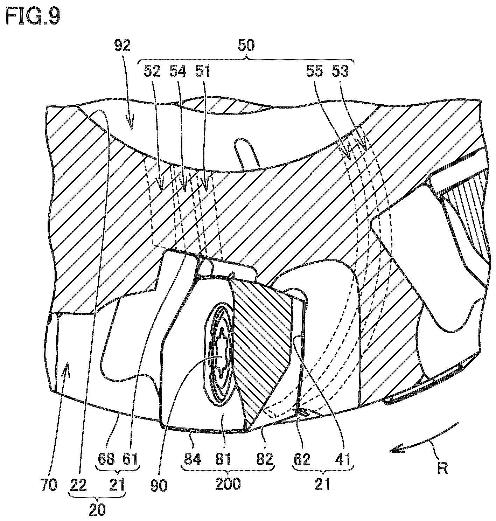

Fig. 9 is an enlarged schematic cross section showing a region IX shown in Fig. 5. In Fig. 9, a broken line indicates channel 50. As shown in Fig. 9, second member 20 has channel 50 formed therethrough. As observed along axis A, first channel portion 51, second channel portion 52, third channel portion 53, fourth channel portion 54, and fifth channel portion 55 do not overlap one another. In other words, as observed along axis A, first channel portion 51, second channel portion 52, third channel portion 53, fourth channel portion 54, and fifth channel portion 55 are each spaced from one another.

As observed along axis A, first channel portion 51 is linear. As observed along axis A, first channel portion 51 is inclined rearward in direction of rotation R with respect to the radial direction. As observed along axis A, second channel portion 52 may be located forward of first channel portion 51 in direction of rotation R. As observed along axis A, second channel portion 52 is inclined rearward in direction of rotation R with respect to the radial direction. As observed along axis A, fourth channel portion 54 may be located forward of first channel portion 51 in direction of rotation R. As observed along axis A, fourth channel portion 54 is linear. As observed along axis A, fourth channel portion 54 is inclined rearward in direction of rotation R with respect to the radial direction.

As observed along axis A, third channel portion 53 is located rearward of first channel portion 51 in direction of rotation R. As observed along axis A, third channel portion 53 is curved. As observed along axis A, third channel portion 53 curves forward in direction of rotation R with respect to the radial direction. From a different point of view, second surface 62 has third channel portion 53 to open forward in direction of rotation R. As observed along axis A, third channel portion 53 is in the form of an arch. As observed along axis A, third channel portion 53 may be arcuate or in the form of a circular arc.

As observed along axis A, fifth channel portion 55 may be located forward of third channel portion 53 in direction of rotation R. As observed along axis A, fifth channel portion 55 is curved. As observed along axis A, fifth channel portion 55 curves forward in direction of rotation R with respect to the radial direction. From a different point of view, second surface 62 has fifth channel portion 55 to open forward in direction of rotation R. As observed along axis A, fifth channel portion 55 is in the form of an arch. As observed along axis A, fifth channel portion 55 may be arcuate or in the form of a circular arc.

As shown in Fig. 9, in the radial direction, cutting edge 84 is located outward of outermost circumferential surface portion 68. As shown in Figs. 7 and 9, in the radial direction, second surface 62 is located outward of first seat surface 41. In the radial direction, first surface 61 may be located inward of first seat surface 41. Body 100 according to the present disclosure can be manufactured for example by using a three-dimensional printer.

### (Second Embodiment)

Hereinafter, a configuration of cutting tool 500 according to a second embodiment will be described. Cutting tool 500 according to the second embodiment differs from cutting tool 500 according to the first embodiment mainly in having a holder 300, and has a remainder substantially identical to the configuration of cutting tool 500 according to the first embodiment. Hereinafter, how cutting tool 500 according to the second embodiment differs in configuration from that according to the first embodiment will mainly be described.

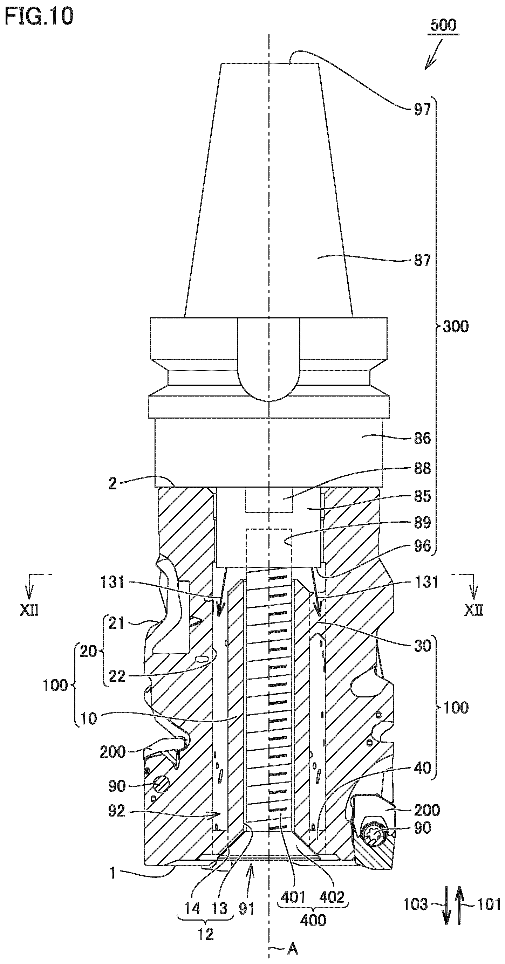

Fig. 10 is a partial schematic cross section showing a configuration of cutting tool 500 according to the second embodiment. Fig. 10 shows body 100, cutting insert 200, and first fastening screw 90, each in cross section. The cross section shown in Fig. 10 is a cross section including axis A and intersecting support member 30.

As shown in Fig. 10, cutting tool 500 may further comprise holder 300 and a second fastening screw 400. Holder 300 is configured to supply space 92 with a cutting fluid. Holder 300 is in contact with first rear end surface 2. Holder 300 is located in first direction 101 with respect to first member 10. Second fastening screw 400 fastens holder 300 and body 100 together.

As shown in Fig. 10, holder 300 has a second front end surface 96 and a second rear end surface 97. In first direction 101, second front end surface 96 is located between first front end surface 1 and first rear end surface 2. At second front end surface 96, holder 300 faces first member 10. Second rear end surface 97 is located in first direction 101 with respect to first rear end surface 2.

As shown in Fig. 10, holder 300 includes an insertion portion 85, a base portion 86, a connecting portion 87, and a protrusion 88. Insertion portion 85 is located in insertion receiving hole 95 (see Fig. 3). Insertion portion 85 forms second front end surface 96. Insertion portion 85 is located in first direction 101 with respect to first member 10. Insertion portion 85 may be spaced from first member 10. Second front end surface 96 is provided with a second screw hole 89. Second screw hole 89 is provided along axis A.

Base portion 86 is contiguous to insertion portion 85. Base portion 86 is located in first direction 101 with respect to insertion portion 85. Base portion 86 is in contact with first rear end surface 2. Protrusion 88 is contiguous to base portion 86. Protrusion 88 is located in third direction 103 with respect to base portion 86. Protrusion 88 is disposed in groove 94. From a different point of view, in groove 94, protrusion 88 is engaged with body 100.

Connecting portion 87 is contiguous to base portion 86. Connecting portion 87 is located in first direction 101 with respect to base portion 86. Connecting portion 87 forms second rear end surface 97. Connecting portion 87 is a portion attached to a tool spindle (not shown). Connecting portion 87 for example has a frustoconical shape. Connecting portion 87 has a diameter increasing from second rear end surface 97 in third direction 103.

As shown in Fig. 10, second fastening screw 400 is located in first through hole 91. Second fastening screw 400 is, for example, a countersunk screw. Second fastening screw 400 has a threaded shank 401 and a head 402. Threaded shank 401 is surrounded by first inner circumferential surface portion 13. Threaded shank 401 may be spaced from first inner circumferential surface portion 13. Threaded shank 401 is fastened to holder 300 in second screw hole 89. Head 402 is contiguous to threaded shank 401. Head 402 for example has a frustoconical shape. Head 402 is in contact with second inner circumferential surface portion 14.

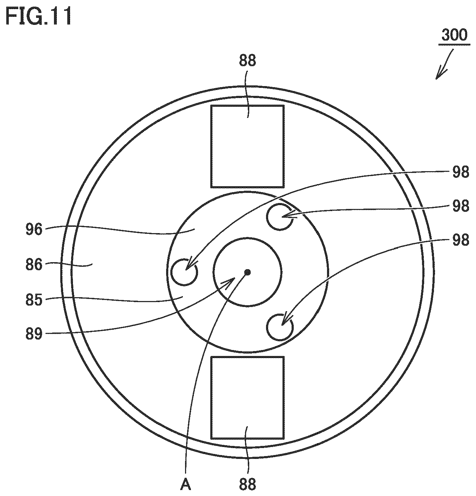

Fig. 11 is a schematic bottom view showing a configuration of holder 300. Fig. 11 shows the configuration of holder 300 as observed in first direction 101. As shown in Fig. 11, holder 300 has a plurality of outlets 98. Specifically, second front end surface 96 is provided with the plurality of outlets 98. Outlet 98 is an opening through which a cutting fluid is discharged. Three outlets 98 are provided, for example. As observed along axis A, the plurality of outlets 98 are positioned so as to be three-fold symmetrical with respect to axis A, for example.

As shown in Fig. 11, holder 300 for example has two protrusions 88. As observed along axis A, insertion portion 85 is located between the two protrusions 88.

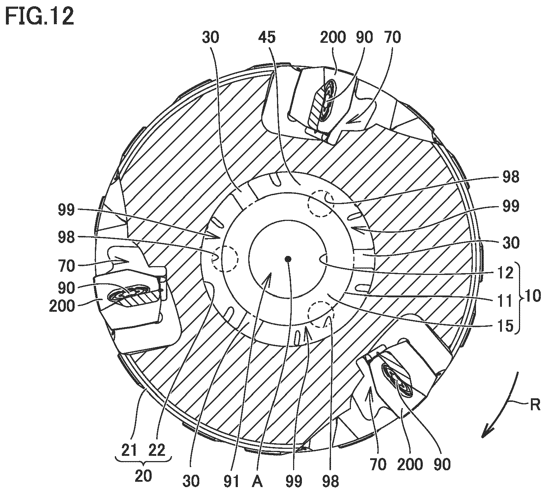

Fig. 12 is a schematic lateral cross section taken along a line XII-XII of Fig. 10. The cross section shown in Fig. 12 is a cross section perpendicular to axis A and passing between first member 10 and holder 300. In Fig. 12, outlet 98 projected in the cross section is indicated using a dashed line.

As shown in Fig. 12, first member 10, second member 20, and support member 30 form at least one inlet 99. Specifically, first member 10, second member 20, and support member 30 form three inlets 99, for example. Inlet 99 is located between insertion receiving hole 95 (see Fig. 3) and space 92 (see Fig. 3). Inlet 99 interconnects insertion receiving hole 95 and space 92.

As shown in Fig. 12, as observed along axis A, outlet 98 overlaps inlet 99. Specifically, as observed along axis A, at least one outlet 98 overlaps at least one inlet 99. As observed along axis A, outlet 98 may have a portion overlapping inclined surface 15. In the radial direction, outlet 98 is located between first inner circumferential surface 12 and second inner circumferential surface 22.

As shown in Fig. 12, as observed along axis A, one outlet 98 overlaps one inlet 99. Outlet 98 is equal in number to inlets 99, for example. Outlet 98 and inlet 99 are not particularly limited in number.

Hereinafter, a function and effect of cutting tool 500 according to the present embodiment will be described.

When cutting tool 500 is used to perform cutting, a cutting fluid is supplied into body 100. As shown in Fig. 10, the cutting fluid flows from holder 300 in a direction indicated by a first arrow 131. Specifically, the cutting fluid flows from outlet 98 into space 92. The cutting fluid is discharged from space 92 to the outside of body 100 through channel 50.

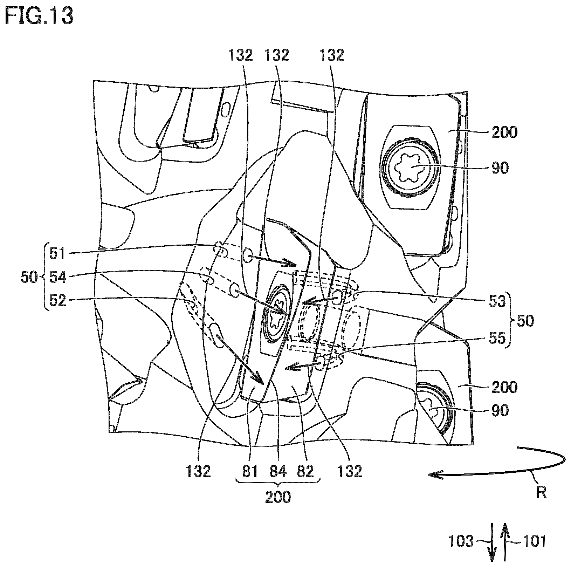

Fig. 13 is an enlarged schematic perspective view showing how the cutting fluid flows around cutting insert 200. The enlarged schematic perspective view shown in Fig. 13 corresponds to the enlarged schematic perspective view shown in Fig. 6. As shown in Fig. 13, channel 50 discharges the cutting fluid, which in turn flows toward cutting insert 200 along a second arrow 132. Cutting insert 200 is thus supplied with the cutting fluid.

When body 100 does not have space 92 formed therein, the cutting fluid passes through first through hole 91 and thus flows out of body 100. Specifically, the cutting fluid passes between second fastening screw 400 and second inner circumferential surface portion 14 and thus flows out of body 100 in third direction 103. Cutting tool 500 according to the present disclosure comprises first member 10 and second member 20. Space 92 is formed between first member 10 and second member 20. Space 92 surrounds first through hole 91. Second member 20 has channel 50 formed therethrough that is contiguous to space 92 and opens at second outer circumferential surface 21. This allows the cutting fluid supplied into body 100 to flow into space 92. This can reduce a flow rate of the cutting fluid flowing into first through hole 91. This can in turn suppress flowing of the cutting fluid out of body 100 through first through hole 91. When this is compared with no space 92 formed, the former can increase a flow rate of the cutting fluid discharged from second outer circumferential surface 21.

According to cutting tool 500 according to the present disclosure, space 92 functions as a channel dedicated to the cutting fluid. When this is compared with no space 92 formed, the former can reduce pressure loss of flow of the cutting fluid.

According to cutting tool 500 according to the present disclosure, the cutting fluid before flowing into channel 50 can be temporarily held in space 92. This allows the cutting fluid to flow from space 92 into each of the plurality of channels 50 at a uniform flow rate. This in turn allows the plurality of channels 50 to each discharge the cutting fluid at a uniform flow rate.

According to cutting tool 500 according to the present disclosure, body 100 has support member 30. Support member 30 interconnects first outer circumferential surface 11 and second inner circumferential surface 22. Support member 30 is spaced from each of first front end surface 1 and first rear end surface 2. This can suppress vibration of each of first member 10 and second member 20 when cutting tool 500 is used to perform cutting.

According to cutting tool 500 according to the present disclosure, third channel portion 53 is curved as observed along axis A. This can reduce a pressure loss of the cutting fluid flowing through third channel portion 53 while allowing an increased degree of freedom in designing third channel portion 53.

According to cutting tool 500 according to the present disclosure, channel 50 includes first channel portion 51. First channel portion 51 opens toward rake face 81. This can effectively cool cutting edge 84 contiguous to rake face 81.

According to cutting tool 500 according to the present disclosure, channel 50 includes third channel portion 53. Third channel portion 53 opens toward flank face 82. This can effectively cool cutting edge 84 contiguous to flank face 82.

When a three-dimensional printer is used to form body 100, forming a portion protruding in a direction perpendicular to a direction in which the three-dimensional printer deposits layers requires a support material. In that case, it is necessary to remove the support material from body 100. This increases a period of time required for forming body 100. According to cutting tool 500 according to the present disclosure, first member 10 has first inner circumferential surface 12. First inner circumferential surface 12 has second inner circumferential surface portion 14. Second inner circumferential surface portion 14 has a diameter decreasing as it is farther away from first front end surface 1. In other words, second inner circumferential surface portion 14 is inclined with respect to a direction perpendicular to first direction 101. When the three-dimensional printer deposits layers in first direction 101, second inner circumferential surface portion 14 can be formed while the support material is used in a reduced amount. This can reduce the period of time required for forming body 100.

According to cutting tool 500 according to the present disclosure, holder 300 is provided with at least one outlet 98. Body 100 has at least one inlet 99. As observed along axis A, at least one outlet 98 overlaps at least one inlet 99. When this is compared with outlet 98 failing to overlap inlet 99 as observed along axis A, the former provides a shorter distance between outlet 98 and inlet 99. This can reduce a pressure loss of the cutting fluid discharged from outlet 98 and flowing toward inlet 99.

### [Examples]

### (Preparing Samples)

Initially, cutting tools 500 according to Samples 1 and 2 were prepared. Cutting tool 500 according to Sample 1 is a comparative example. Cutting tool 500 according to Sample 2 is an example.

Cutting tool 500 according to Sample 1 had no space 92 formed therein. In other words, cutting tool 500 according to Sample 1 had channel 50 contiguous to first through hole 91. Cutting tool 500 according to Sample 2 was configured as shown in Figs. 10 to 12. Specifically, cutting tool 500 according to Sample 2 had space 92 formed therein.

### (Method for Evaluation)

Subsequently, cutting tools 500 according to Samples 1 and 2 were evaluated in uniformity in amount of a cutting fluid discharged. Specifically, three pockets 70 aligned in direction of rotation R were considered as one stage, and fifteen pockets 70 were grouped into five stages. For each of the five stages, a total value of amounts of the cutting fluid discharged from opening 150 was measured. A ratio of an amount of the cutting fluid discharged at each of the five stages to a total value of amounts of the cutting fluid discharged from all openings 150 was calculated.

### (Evaluation Result)

**[Table 1]**

| | ratio of amount of cutting fluid discharged | |
|---|---|---|
| | sample 1 | sample 2 |
| 1 st stage | 7% | 21% |
| 2nd stage | 28% | 21% |
| 3rd stage | 28% | 18% |
| 4th stage | 27% | 19% |
| 5th stage | 10% | 21% |

Table 1 shows a ratio of an amount discharged in each row of cutting tool 500 according to each of Samples 1 and 2. In Table 1, a first stage indicates one of the five stages that is closest to first rear end surface 2. The four stages other than the first stage are set as a second stage to a fifth stage in order from the first stage in third direction 103.

As shown in Table 1, cutting tool 500 according to Sample 1 provided 7% or more and 28% or less as a ratio of an amount discharged at each of the first to fifth stages. Cutting tool 500 according to Sample 2 provided 18% or more and 21% or less as a ratio of an amount discharged at each of the first to fifth stages.

From the above results, when cutting tool 500 of the example is compared with cutting tool 500 of the comparative example, it has been confirmed that the former discharges a cutting fluid in a direction along axis A in a more uniform amount.

It should be understood that the embodiments and examples disclosed herein are illustrative and non-restrictive in any respect. The scope of the present invention is defined by the terms of the claims rather than the embodiments described above, and is intended to encompass any modification falling within the scope and meaning equivalent to the terms of the claims.

### REFERENCE SIGNS LIST

1 first front end surface (front end surface), 2 first rear end surface (rear end surface), 10 first member, 11 first outer circumferential surface, 12 first inner circumferential surface, 13 first inner circumferential surface portion, 14 second inner circumferential surface portion, 15 inclined surface, 20 second member, 21 second outer circumferential surface (outermost circumferential surface), 22 second inner circumferential surface (inner circumferential surface), 30 support member, 34 fourth surface, 35 fifth surface, 40 fixing member, 41 first seat surface (seat surface), 42 second seat surface, 43 third seat surface, 45 third surface, 50 channel, 51 first channel portion, 52 second channel portion, 53 third channel portion (channel portion), 54 fourth channel portion, 55 fifth channel portion, 61 first surface, 62 second surface, 68 outermost circumferential surface portion, 70 pocket, 79 second through hole, 80 flat surface, 81 rake face, 82 flank face, 83 bottom surface, 84 cutting edge, 85 insertion portion, 86 base portion, 87 connecting portion, 88 protrusion, 89 second screw hole, 90 first fastening screw, 91 first through hole (through hole), 92 space, 93 first screw hole, 94 groove, 95 insertion receiving hole, 96 second front end surface, 97 second rear end surface, 98 outlet, 99 inlet, 100 body, 101 first direction, 102 second direction, 103 third direction, 131 first arrow, 132 second arrow, 150 opening, 151 first opening, 152 second opening, 153 third opening, 154 fourth opening, 155 fifth opening, 160 connection port, 200 cutting insert, 300 holder, 400 second fastening screw, 401 threaded shank, 402 head, 500 cutting tool, A axis, R direction of rotation, W1 first width, W2 second width.

## Claims

1. A cutting tool rotatable about an axis, comprising:
a body including a front end surface, a rear end surface opposite to the front end surface, and an outermost circumferential surface that is contiguous to each of the front end surface and the rear end surface and has a pocket; and
a cutting insert disposed in the pocket, wherein
the body includes:
a first member that surrounds the axis and has a first outer circumferential surface;
a second member that has an inner circumferential surface surrounding the first outer circumferential surface and forms each of the front end surface, the rear end surface, and the outermost circumferential surface;
a support member that interconnects the first outer circumferential surface and the inner circumferential surface and is spaced from each of the front end surface and the rear end surface; and
a fixing member that closes a gap between the first outer circumferential surface and the inner circumferential surface,
the first member has a through hole that extends along the axis,
a space is formed between the first member and the second member,
the space surrounds the through hole, and
the second member has a channel formed therethrough that is contiguous to the space and opens at the outermost circumferential surface.

2. The cutting tool according to claim 1, wherein the channel has a channel portion that is curved as observed along the axis.

3. The cutting tool according to claim 1 or 2, wherein the channel has an elliptical shape in a cross section perpendicular to a direction in which the channel extends.

4. The cutting tool according to any one of claims 1 to 3, wherein
when, in a cross section perpendicular to a direction in which the channel extends, a width of the channel in a first direction from the front end surface toward the rear end surface is defined as a first width, and a width of the channel in a second direction perpendicular to the first direction is defined as a second width,
the first width is larger than the second width.

5. The cutting tool according to any one of claims 1 to 4, wherein
the cutting insert includes a bottom surface in contact with the outermost circumferential surface and a rake face opposite to the bottom surface,
the outermost circumferential surface has a seat surface in contact with the bottom surface and a first surface located forward of the seat surface in a direction of rotation,
the seat surface and the first surface form the pocket,
the channel has a first channel portion that opens at the first surface, and
the first channel portion opens toward the rake face.

6. The cutting tool according to claim 5, wherein
the channel has a second channel portion that opens at the first surface and is spaced from the first channel portion,
the second channel portion opens toward the rake face,
the first surface has a first opening contiguous to the first channel portion and a second opening contiguous to the second channel portion, and
the first opening is different in area from the second opening.

7. The cutting tool according to claim 5, wherein
the channel has a second channel portion that opens at the first surface and is spaced from the first channel portion,
the second channel portion opens toward the rake face, and
when an area of the first channel portion in a cross section perpendicular to a direction in which the first channel portion extends is defined as a first area and an area of the second channel portion in a cross section perpendicular to a direction in which the second channel portion extends is defined as a second area,
the first area is different from the second area.

8. The cutting tool according to any one of claims 5 to 7, wherein
the cutting insert includes a flank face contiguous to the rake face,
the outermost circumferential surface has a second surface located rearward of the seat surface in the direction of rotation and located in a direction from the axis toward the outermost circumferential surface with respect to the seat surface,
the channel has a third channel portion that opens at the second surface, and
the third channel portion opens toward the flank face.

9. The cutting tool according to any one of claims 1 to 8, wherein
the first member includes a first inner circumferential surface that forms the through hole,
the first inner circumferential surface has:
a first inner circumferential surface portion that extends along the axis; and
a second inner circumferential surface portion that is located between the first inner circumferential surface portion and the front end surface and inclined with respect to the first inner circumferential surface portion, and
the second inner circumferential surface portion has a diameter decreasing as the second inner circumferential surface portion is farther away from the front end surface.

10. The cutting tool of any one of claims 1 to 9, further comprising a holder that supplies the space with a cutting fluid, wherein
the holder has at least one outlet,
the first member, the second member, and the support member form at least one inlet that is contiguous to the space,
as observed along the axis, the at least one outlet overlaps the at least one inlet, and
the at least one outlet is equal in number to the at least one inlet.
